# EUROPEAN PATENT APPLICATION

(11) **EP 2 317 435 A1**
(43) Date of publication of application: **04.05.2011**
(21) Application number: 10189299.0
(22) Date of filing: 28.10.2010
(51) Int. Cl.: G06F 9/445

(54) **Electronic device and method for making upgraded firmware**

(30) Priority: 30.10.2009 KR 20090104451
(71) Applicant: SAMSUNG ELECTRONICS CO., LTD., Suwon-si, Gyeonggi-do (KR)
(72) Inventor: Hong, Jin-hyuck, Gyeonggi-do (KR)
(74) Representative: Hewett, Jonathan Michael Richard

(57) **Abstract**

An electronic device in which a firmware is being currently executed and method for upgrading the firmware, the electronic device including: a storage which stores a basic firmware used to upgrade the currently-executed firmware; a receiver which receives a first binary file for making an upgraded firmware based on the stored basic firmware; and a controller which makes the upgraded firmware based on the received first binary file and the stored basic firmware, if the first binary file is received.

## Description

The present invention relates to an electronic device which executes a firmware and a method for executing a firmware for firmware-updating. More particularly, the present invention relates to an electronic device and method for storing a basic firmware for firmware-upgrading, wherein if a first binary file for making an upgraded firmware based on the basic firmware is received by the electronic device, the electronic device makes an upgraded firmware based on the received first binary file and the stored basic firmware to easily upgrade a firmware that is being executed.

Many electronic devices have always been in need for upgrading a firmware that is being executed therein due to various reasons, such as bugs, firmware errors, firmware version update, and the like. For the user's convenience, an over the air (OTA) transmitting method has been employed to provide an upgraded firmware by wireless transmission. Since, however, the firmware itself has a large data capacity, the transmission and download of the firmware takes a long time.

To solve such a problem, the following technique has been suggested. According to this technique, instead of entirely transmitting and downloading a new full version of upgraded firmware, the new full version of upgraded firmware is compared with a previous version firmware to extract different parts and, then, a binary patch file is created. Thereafter, the created binary patch file is compressed to minimize a size of the binary patch file in order to be quickly transmitted and downloaded.

However, different version firmwares are executed in various electronic devices. Even through corresponding binary patch files are created by extracting different parts through such comparison with each of the different version firmwares, there are as many extracted binary patch files as the number of the different version firmwares. As a result, it takes a long time for all binary path files of the different versions to be transmitted and downloaded, thereby causing a user's inconvenience. Accordingly, the exemplary embodiments provide an electronic device and a method capable of updating a firmware that is being executed therein regardless of version information of the firmware.

According to an aspect of the present invention, there is provided an electronic device in which a firmware is being currently executed, the device including: a storage which stores a basic firmware used to upgrade the currently-executed firmware; a receiver which receives a first binary file for making an upgrading firmware based on the stored basic firmware; and a controller which makes the upgrading firmware based on the received first binary file and the stored basic firmware, if the first binary file is received.

The currently-executed firmware may be made based on the stored basic firmware.

The first binary file may be a differential image file between the basic firmware and the upgrading firmware.

The first binary file may include information for making the upgrading firmware based on the basic firmware.

The receiver may include a communication unit which performs a network communication with an external apparatus, and the controller may control the communication unit to transmit a request message for upgrading the currently-executed firmware to the external apparatus, and to receive the first binary file from the external apparatus in response to the request message.

The electronic device may further include a signal processor which extracts the first binary file from a broadcasting signal including the first binary file, wherein the receiver may receive the broadcasting signal, and if the broadcasting signal including the first binary file is received, the controller may control the signal processor to extract the first binary file from the broadcasting signal, and the control may make the upgrading firmware based on the extracted first binary file and the stored basic firmware.

According to another aspect of the present invention, there is provided an electronic device in which a firmware is being executed, the device including: a storage which stores a second binary file for restoring a basic firmware used to upgrade the currently-executed firmware; a receiver which receives a first binary file for making an upgrading firmware based on the basic firmware; and a controller which restores the basic firmware based on the currently-executed firmware and the stored second binary file, if the first binary file is received by the receiver, and to make the upgrading firmware based on the restored basic firmware and the received first binary file.

The currently-executed firmware may be made based on the restored basic firmware.

The second binary file may be a differential image file between the basic firmware and the currently-executed firmware.

The second binary file may include information for restoring the basic firmware based on the currently-executed firmware.

The first binary file may be a differential image file between the basic firmware and the upgrading firmware.

The first binary file may include information for making the upgrading firmware based on the basic firmware.

The receiver may include a communication unit which performs a network communication with an external apparatus, and the controller may control the communication unit to transmit a request message for upgrading the currently-executed firmware to the external apparatus, and to receive the first binary file from the external apparatus in response to the request message.

The electronic device may further include a signal processor which extracts the first binary file from a broadcasting signal including the first binary file, wherein the receiver may receive the broadcasting signal, and if the broadcasting signal including the first binary file is received, the controller may control the signal processor to extract the first binary file from the broadcasting signal, the controller may make the upgrading firmware based on the extracted first binary file and the restored basic firmware.

According to another aspect of the present invention, there is provided an method for making an upgrading firmware in an electronic device in which a firmware is being executed, the method including: storing a basic firmware used to upgrade the currently-executed firmware; receiving a first binary file for making an upgrading firmware based on the basic firmware; and making the upgrading firmware based on the first binary file and the basic firmware.

The currently-executed firmware may be made based on the stored basic firmware.

The first binary file may be a differential image file between the basic firmware and the upgrading firmware.

The first binary file may include information for making the upgrading firmware based on the basic firmware.

The method further may include: transmitting a request message for upgrading the currently-executed firmware to an external apparatus through a network communication of a communication unit, wherein the receiving of a first binary file may include receiving the first binary file from the external apparatus through the communication unit in response to the request message.

The method may further include extracting the first binary file from a broadcasting signal including the first binary file, wherein the receiving of the first binary file may include receiving the broadcasting signal.

According to another aspect of the present invention, there is provided a method for making an upgrading firmware in an electronic device in which a firmware is being executed, the method including: storing a second binary file for restoring a basic firmware used to upgrade the currently-executed firmware; restoring the basic firmware based on the second binary file; receiving a first binary file for making an upgrading firmware based on the basic firmware; and making the upgrading firmware based on the first binary file and the basic firmware.

The currently-executed firmware may be made based on the restored basic firmware.

The first binary file may be a differential image file between the basic firmware and the upgrading firmware.

The first binary file may include information for making the upgrading firmware based on the basic firmware.

The second binary file may be a differential image file between the basic firmware and the currently-executed firmware.

The second binary file may include information for restoring the basic firmware based on the currently-executed firmware.

The method may further include transmitting a request message for upgrading the currently-executed firmware to an external apparatus through a network communication of a communication unit, wherein the receiving of the first binary file may include receiving the first binary file from the external apparatus through the communication unit in response to the request message.

The method may further include extracting the first binary file from a broadcasting signal including the first binary file, wherein the receiving of the first binary file may include receiving the broadcasting signal.

According to another aspect of the present invention, there is provided a method for making an upgrading firmware in an electronic device in which a firmware is being currently executed, the method including: receiving a first binary file for making an upgrading firmware based on a basic firmware distinct from the currently-executed firmware; and making the upgrading firmware based on the received first binary file and the basic firmware.

The above and/or other aspects will become apparent and more readily appreciated from the following description of the exemplary embodiments, taken in conjunction with the accompanying drawings, in which:
FIG. 1 is a block diagram showing a structure of an electronic device in accordance with a first exemplary embodiment;
FIG. 2 shows how a related art method for upgrading a firmware is performed;
FIGs. 3A and 3B show how a method for upgrading a firmware is performed in accordance with the first exemplary embodiment;
FIG. 4 is a flowchart showing a method for making an upgrading firmware in accordance with the first exemplary embodiment;
FIG. 5 is a block diagram showing a structure of an electronic device in accordance with a second exemplary embodiment;
FIG. 6 is a flowchart showing a method for making an upgrading firmware in accordance with the second exemplary embodiment;
FIG. 7 is a block diagram showing a structure of an electronic device in accordance with a third exemplary embodiment;
FIG. 8 is a flowchart showing a method for making an upgrading firmware in accordance with the third exemplary embodiment;
FIG. 9 shows how a method for upgrading a firmware is performed in accordance with a fourth exemplary embodiment; and
FIG. 10 is a flowchart showing a method for making an upgrading firmware in accordance with the fourth exemplary embodiment.

Below, exemplary embodiments will be described in detail with reference to accompanying drawings so as to be easily realized by a person having ordinary knowledge in the art. The present inventive concept may be embodied in various forms without being limited to the exemplary embodiments set forth herein. Descriptions of well-known parts are omitted for clarity, and like reference numerals refer to like elements throughout.

Referring to the accompanying drawings, exemplary embodiments are as follows.

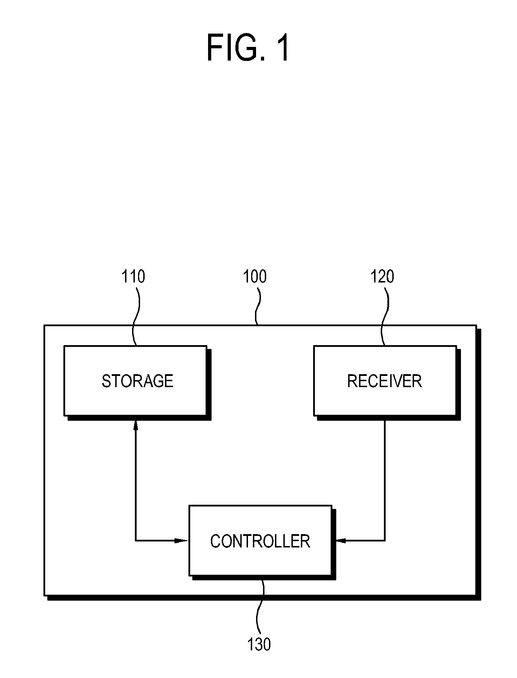

FIG. 1 is a block diagram showing a structure of an electronic device 100 in accordance with a first exemplary embodiment. As shown in FIG. 1, the electronic device 100 may include a storage 110, a receiver 120, and a controller 130.

In accordance with the first exemplary embodiment, the electronic device 100 may include various electronic apparatuses that execute specific firmwares. For example, the electronic device 100 may include a personal computer (PC), a laptop computer, a net book, a smart book, a portable wireless communication terminal, a personal digital assistance (PDA), a digital TV, a set top box (STB), a personal video recorder (PVR), a digital video recorder (DVR), a home network electronic device, etc.

The storage 110 may store a basic firmware used to upgrade a firmware that is being executed in the electronic device 100. In other words, the firmware that is being executed in the electronic device 100 and the basic firmware may be stored in the storage 110. Since the basic firmware is not executed to substantially serve as a typical currently-executed firmware in the electronic device 100, the basic firmware may be distinguished from the currently-executed firmware. The basic firmware may be employed to upgrade the currently-executed firmware. The currently-executed firmware may be made based on the basic firmware or other sources.

Here, the storage 110 may be a non-volatile memory such as a read-only memory (ROM), a programmable read-only memory (PROM), or a flash memory.

The receiver 120 may receive a first binary file for making an upgraded firmware (also referred to as upgrading firmware) based on the stored basic firmware. The receiver 120 may include or implement any type of receiving protocol used to receive the first binary file transferred from an outside. For example, when an external apparatus transmits the first binary file by using an over the air (OTA) method, the receiver 120 may include or implement an OTA protocol to receive the first binary file.

Here, the first binary file may be a differential image file created by extracting different parts through the comparison between the basic firmware and the upgrading firmware. The first binary file may also be the differential image file to be compressed. Furthermore, the first binary file may include information for making the upgrading firmware based on the basic firmware.

If the first binary file is received by the receiver 120, the controller 130 may make an upgrading firmware based on the received first binary file and the basic firmware stored in the storage 110. Accordingly, the firmware that is being executed in the electronic device 100 may be upgraded to the made upgrading firmware.

As described above, since the first binary file is the differential image file created by extracting the different parts through the comparison between the basic firmware and the upgrading firmware, it may be said that the upgrading firmware is made based on the first binary file and the basic firmware.

Further, since the first binary file includes the information for making the upgrading firmware based on the basic firmware, it may also be said that the upgrading firmware is made based on the first binary file and the basic firmware.

As a result, in accordance with the first exemplary embodiment, the electronic device 100 may receive the first binary file from the outside to upgrade the firmware that is currently executed therein. Then, the electronic device 100 may make the upgrading firmware based on the first binary file and the basic firmware stored therein. Accordingly, the currently-executed firmware may very easily be upgraded to the made upgrading firmware.

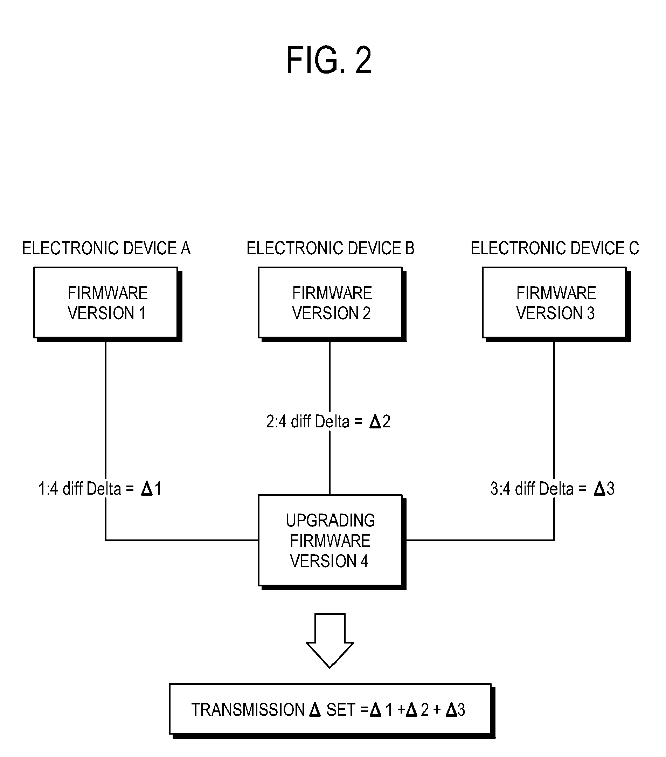

FIG. 2 shows how a related art method for updating a firmware is performed. As shown in FIG. 2, a plurality of electronic devices A, B, and C that perform one-way communications are currently executing different firmwares having versions 1, 2, and 3, respectively. Version 4 is a version for an upgrading firmware.

According to the related art technique, transmission of the following binary patch files is required: a binary patch file Δ1 created by extracting different parts through a comparison between the firmwares of version 4 and 1; a binary patch file Δ2 created by extracting different parts through a comparison between the firmwares of version 4 and 2; and a binary patch file Δ3 created by extracting different parts through a comparison between the firmwares of version 4 and 3. The transmission of the three binary patch files together is required because an external apparatus for transmitting such binary patch files has no information related to which version of firmware is used in a target electronic device.

As such, all of the binary patch files of the respective versions are transmitted to the target electronic device and, then, the binary patch file of the adequate version for the target electronic device is selected to upgrade a corresponding firmware. Accordingly, according to the related art technique, it takes a long time to transmit and download all of the binary patch files of the respective versions.

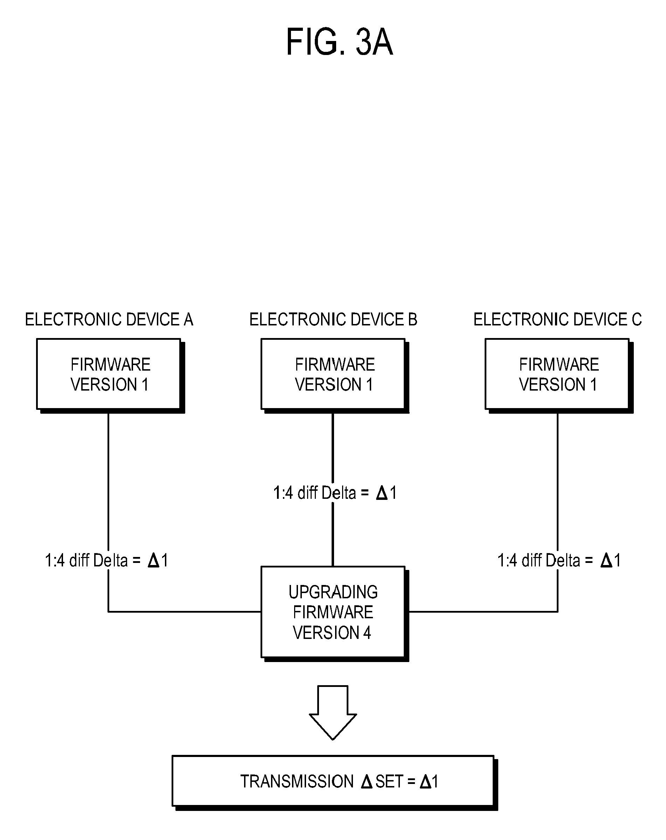

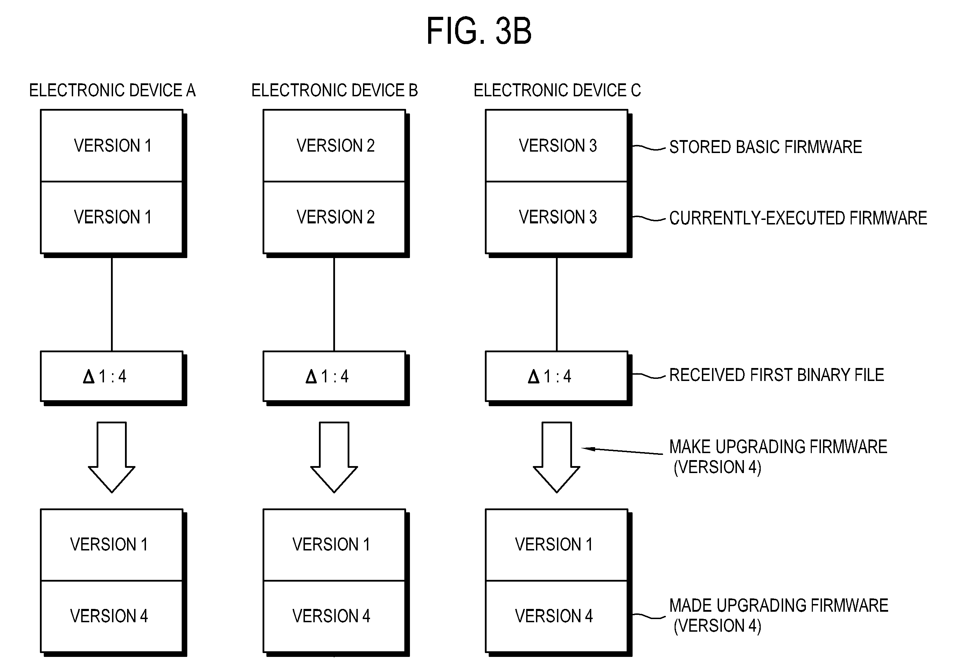

FIGs. 3A and 3B show how a method for updating a firmware is performed in accordance with the first exemplary embodiment. Referring to FIGs. 3A and 3B, a plurality of electronic devices A, B, and C execute firmware versions 1, 2, and 3, respectively. All electronic devices A, B, and C may have the firmware of version 1 as a basic firmware, and an upgrading firmware is a firmware of version 4.

FIG. 3A shows how an upgrading firmware is generated and transmitted from a viewpoint of a transmitting terminal. As shown in FIG. 3A, from the viewpoint of transmitting terminal, since all the electronic devices A, B, and C store the basic firmware (version 1), the transmitting terminal may transmit a first binary file Δ1:4 created by extracting different parts through the comparison between the basic firmware (version 1) and the upgrading firmware (version 4) to the electronic devices A, B, and C.

As a result, since the first binary file Δ1:4 is created and transmitted, as opposed to all of the binary patch files as described above with reference to FIG. 2, it is possible to obtain benefits in storage capacity and transmitting time of the transmitting terminal.

FIG. 3B shows an electronic device in accordance with the first exemplary embodiment from a viewpoint of a receiving terminal that receives the upgrading firmware. Since the electronic devices A, B, and C store the basic firmware (version 1) as well as the currently-executed firmwares of the versions, 1, 2, and 3, respectively, an external device may transmit the first binary file Δ1:4 created by extracting different parts through the comparison between the basic firmware (version 1) and the upgrading firmware (version 4) to perform a firmware upgrade.

As a result, the number of binary patch files transmitted to perform the firmware upgrade may be 1/N times as many as that of the related art method (where N = the number of firmware versions), and a transmitted data capacity may significantly be reduced as compared with the related art method.

In addition, since each of the electronic devices A, B, and C downloads the first binary file Δ1:4, the number of files to be downloaded may be 1/N as many as that of the related art method, thereby reducing a download data capacity significantly. As a result, a download speed may be significantly faster as compared to the related art method.

Each of the electronic devices A, B, and C which receives the first binary file A1:4 may make the upgrading firmware based on the received first binary file Δ1:4 and the basic firmware (version 1) stored in the storage to upgrade the firmware that is currently executed therein.

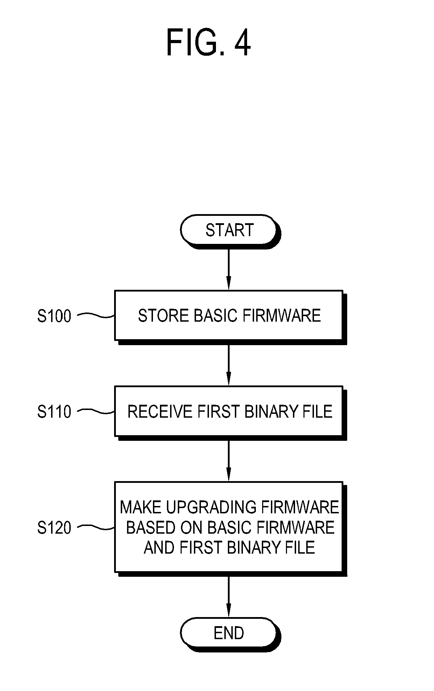

FIG. 4 is a flowchart showing a method for making an updated firmware in accordance with the first exemplary embodiment. As shown in FIG. 4, an electronic device 100 stores in a storage 110 a basic firmware used to upgrade a firmware that is being executed therein (S100). If a first binary file for making an upgrading firmware based on the stored basic firmware is received from an outside (S110), a controller 130 of the electronic device 100 makes the upgrading firmware based on the stored basic firmware and the received first binary file (S120).

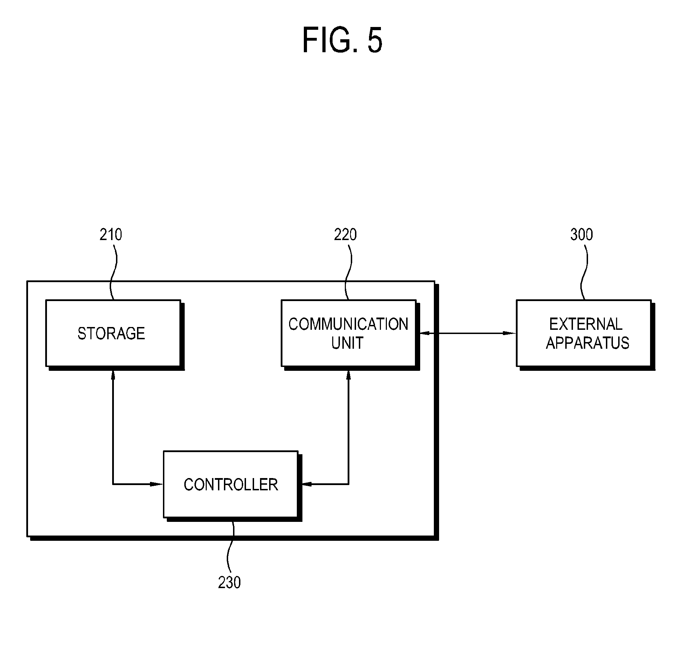

FIG. 5 is a block diagram showing a structure of an electronic device 200 in accordance with a second exemplary embodiment. As shown in FIG. 5, the electronic device 200 may include a storage 210, a communication unit 220, and a controller 230. Furthermore, the electronic device 200 may perform a two-way communication.

Here, since the description related to the electronic device 200 and the storage 210 is similar to that of the electronic device 100 and the storage 110 shown in FIG. 1, any redundant descriptions thereof will be omitted herein.

The communication unit 220 may perform a wireless network communication with an external apparatus 300. Such a wireless network may include a wireless local area network (WLAN) and a wireless wide area network. Accordingly, the communication unit 220 may have and implement various communication protocols used for the wireless network communication.

The external apparatus 300, which is an apparatus capable of performing the wireless network communication with the communication unit 220 of the electronic device 200, may include an external server, an external PC, a web server, a base station and/or the like.

The controller 230 may control the communication unit 220 to transmit to the external apparatus 300 a request message for upgrading a firmware that is being executed in the electronic device 200 and to receive a first binary patch file from the external apparatus 300 in response to the message.

The electronic device 200 may further include a message creating unit (not shown). The controller 230 may control the message creating unit to create the request message for upgrading the firmware and the communication unit 220 to transmit the created message to the external apparatus 300.

In response to the transmitted message, the communication unit 220 may receive from the external apparatus 300 a first binary file for making an upgrading firmware based on the a basic firmware stored in the storage 210. Accordingly, the controller 230 may make the upgrading firmware based on the received first binary file and the first basic firmware, and the currently-executed firmware can be upgraded to the made upgrading firmware.

According to a related art method, an external apparatus may create and store binary patch files for each version to perform firmware upgrading, and transmit the made binary patch files to a plurality of electronic devices that execute firmwares of different versions. However, as described above, the external apparatus 300 may create the first binary file by extracting different parts through a comparison between the basic firmware and the upgrading firmware, and store and transmit the created first binary file. Accordingly, the number of binary patch files to be created by the external apparatus 300 may be 1/N as many as that of the related art method (where N = the number of firmware versions), thereby reducing the time during which the binary patch files are created. Furthermore, the data capacity of the created binary patch files can be significantly reduced, thereby becoming economic in a storage capacity. Also, a transmitting speed can be faster and a communication bandwidth used for transmission can be significantly reduced as compared with those of the related art method.

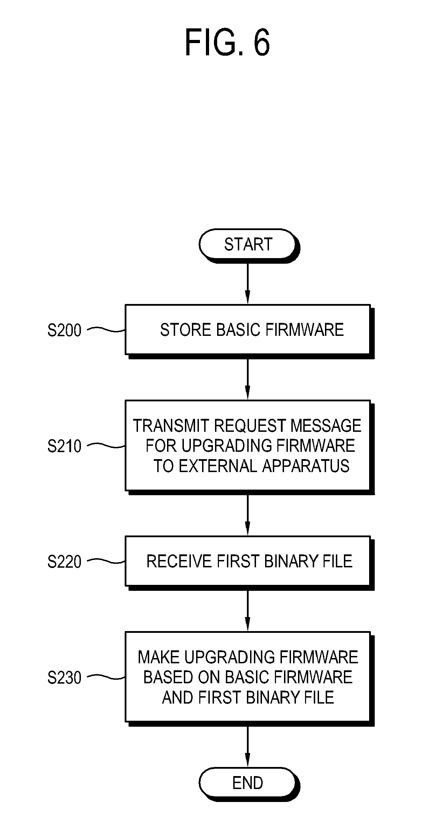

FIG. 6 is a flowchart showing a method for making an updated firmware in accordance with the second exemplary embodiment. As shown in FIG. 6, an electronic device 200 stores in a storage 210 a basic firmware used to upgrade a firmware that is being executed therein (S200). A request message for upgrading the firmware is transmitted to an external apparatus 300 through a communication unit 220 (S210). If a first binary file for making an upgrading firmware based on the stored basic firmware is received from the external apparatus 300 in response to the message (S220), a controller 230 of the electronic device 200 makes the upgrading firmware based on the stored basic firmware and the received first binary file (S230).

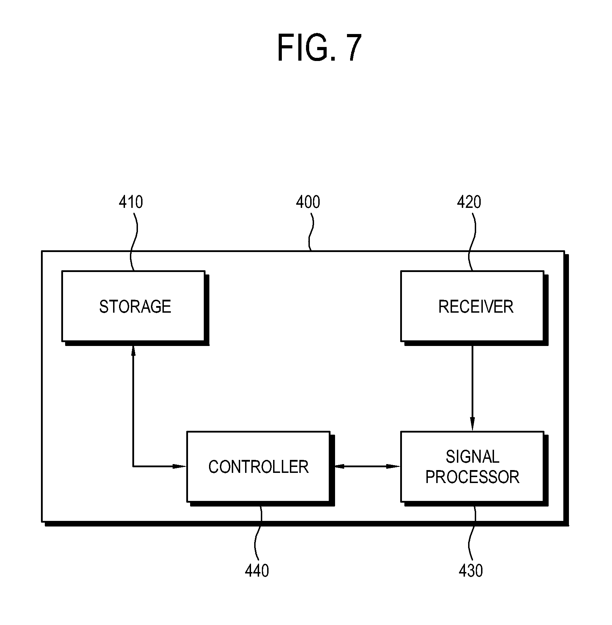

FIG. 7 is a block diagram showing a structure of an electronic device 400 in accordance with a third exemplary embodiment. As shown in FIG. 7, the electronic device 400 may include a storage 410, a receiver 420, a signal processor 430, and a controller 440.

As an example, the electronic device 400 may be a broadcasting signal receiving device capable of receiving a broadcasting signal from an outside. For example, the electronic device 400 may include a display apparatus such as a STB, a PVR, and a DTV.

Since the storage 410 is similar to the storage 110 shown in FIG. 1, any redundant description thereof will be omitted herein.

The receiver 420 may receive a broadcasting signal including a first patch binary file from an outside. Accordingly, the receiver 420 may include a tuner (not shown) for being tuned to a specific broadcasting signal.

The signal processor 430 may extract a first binary file from the broadcasting signal received by the receiver 420. The signal processor 430 may also divide the received broadcasting signal into an image signal, a sound signal, a data signal, and the first binary file.

The signal processor 430 may further include an image signal processor (not shown) for processing the divided image signal and a sound signal processor (not shown) for processing the divided sound signal. The first binary file extracted/divided by the signal processor 430 may be transmitted to the controller 440, which will be described later.

If the electronic device 400 is a display apparatus, the electronic device 400 may further include a display unit (not shown) and a speaker (not shown). An image corresponding to the image signal processed by the image signal processor may be displayed on the display unit, and a sound corresponding to the sound signal processed by the sound signal processor may be outputted through the speaker.

If a broadcasting signal including a first binary file is received by the receiver 420, the controller 440 may control the signal processor 430 to extract the first binary file and make an upgrading firmware based on the extracted first binary file and a basic firmware stored in the storage 410 to upgrade a firmware that is currently executed in the electronic device 400. At this time, the upgrading method may be the same as described with reference to FIGs. 3B and 4.

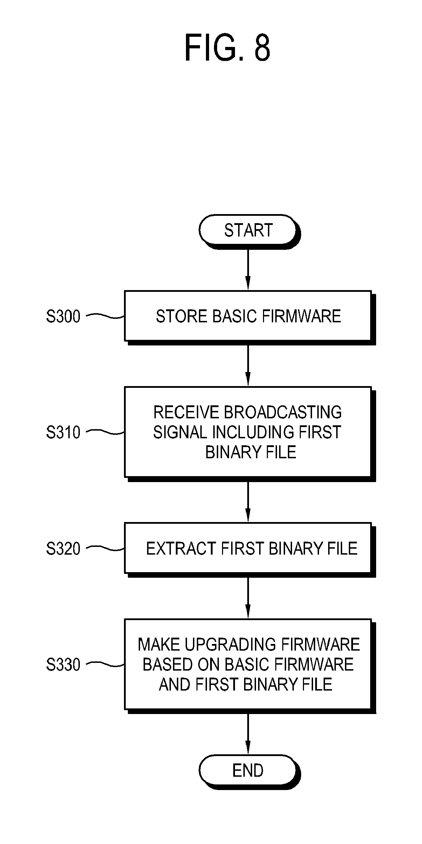

FIG. 8 is a flowchart showing a method for making an updated firmware in accordance with the third exemplary embodiment. As shown in FIG. 8, an electronic device 400 stores in a storage 410 a basic firmware used to upgrade a firmware that is currently executed therein (S300). A broadcasting signal is received, the broadcasting signal including a first binary file for making an upgrading firmware based on the stored basic firmware (S310). The first binary file is extracted from the received broadcasting signal by a signal processor 430 (S320). A controller 440 of the electronic device 400 makes the upgrading firmware based on the stored basic firmware and the received first binary file (S330).

In accordance with a fourth exemplary embodiment, a second binary file may be stored in the storage 110, 210, or 410 as an element of the electronic device 100, 200, or 400 shown in FIGs. 1, 5, or 6, respectively, instead of a basic firmware used to upgrade a firmware that is being executed in the electronic device 100, 200, or 400.

Accordingly, the second binary file and the firmware that is currently executed in the electronic device 100, 200, or 400 may be stored in the electronic device 100, 200, or 400, respectively, in accordance with the fourth exemplary embodiment.

Here, the second binary file, which is used to restore the basic firmware used to upgrade the currently-executed firmware, may be a differential image file created by extracting different parts through the comparison between the currently-executed firmware and the basic firmware. In addition, the second binary file may include information for restoring the basic firmware based on the currently-executed firmware. Since a data capacity of the firmware itself is large, the fourth exemplary embodiment may be beneficial to an electronic device including a small capacity.

Accordingly, the controller of the electronic device may restore the basic firmware based on the second binary file stored in the storage. Moreover, the controller may make an upgrading firmware based on the restored basic firmware and the first binary file received by the receiver or the communication unit of the electronic device. Accordingly, the firmware that is being executed in the electronic device may be upgraded to the made upgrading firmware.

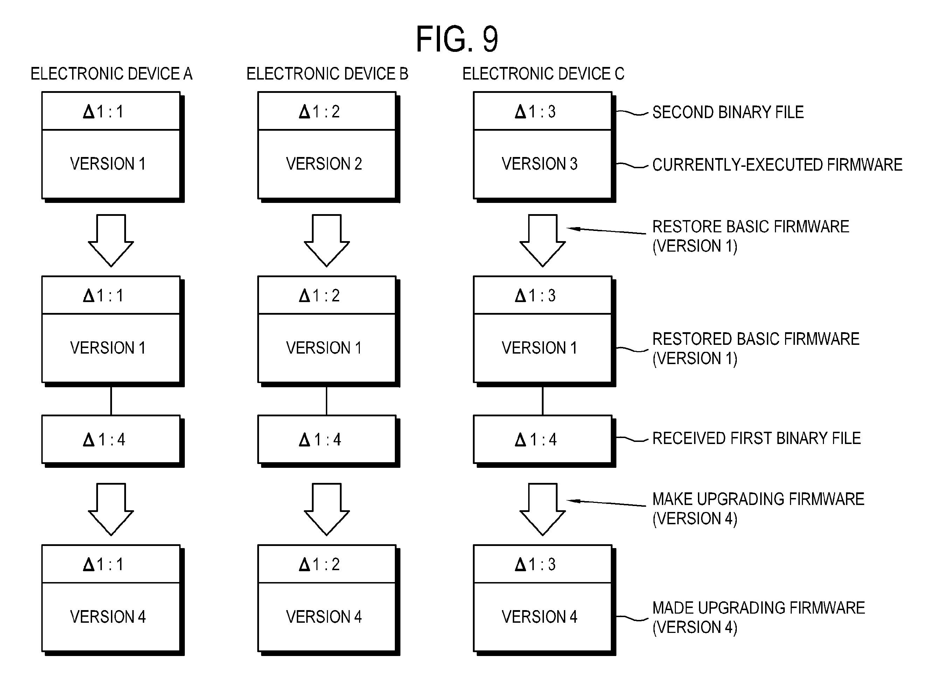

FIG. 9 shows how a method for updating a firmware is performed in accordance with the fourth exemplary embodiment. As shown in FIG. 9, electronic devices A, B, and C may currently execute firmwares of version 1, 2, and 3, respectively, and all the electronic devices A, B, and C may store second binary files corresponding to each version 1, 2, and 3. Specifically, the electronic device A may store a second binary file Δ1:1 created by extracting different parts through the comparison between the currently-executed firmware of version 1 and the basic firmware (version 1). Similarly, the electronic devices B and C may store second binary files Δ1:2 and Δ1:3, respectively. An upgrading firmware may be a firmware of version 4.

Accordingly, the electronic devices A, B, and C may restore the basic firmware (version 1) based on the second binary files Δ1:1, Δ1:2, and Δ1:3 and the currently-executed firmwares of version 1, 2, and 3, respectively.

To perform a firmware upgrade, the external apparatus may transmit a first binary file Δ1:4 created by extracting different parts through the comparison between the basic firmware and the upgrading firmware. Since the basic firmware (version 1) is restored in each of the electronic devices A, B, and C receiving the first binary file Δ1:4, the electronic devices A, B, and C may make the upgrading firmware (version 4) based on the received first binary file Δ1:4 and the restored basic firmware (version 1) to upgrade the firmware that is currently executed therein.

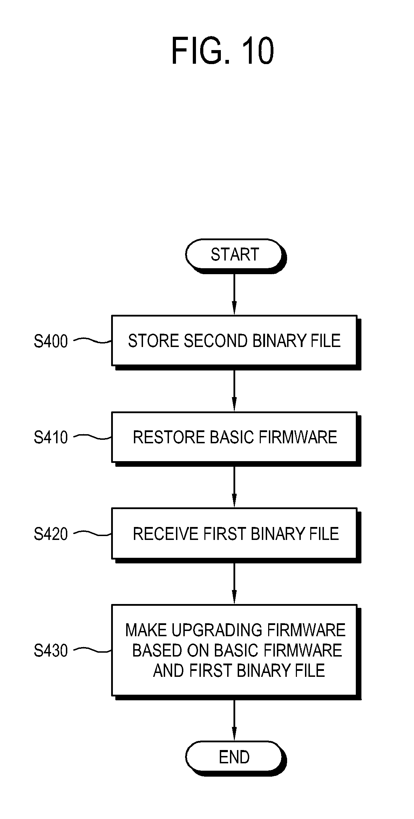

FIG. 10 is a flowchart showing a method for making an updated firmware in accordance with the fourth exemplary embodiment. As shown in FIG. 10, an electronic device stores in a storage a second binary file to be used to restore a basic firmware used to upgrade a firmware that is currently executed therein (S400). The basic firmware is restored based on the stored second binary file and the currently-executed firmware (S410). If a first binary file for making an upgrade firmware based on the basic firmware is received (S420), a controller of the electronic device makes the upgrading firmware based on the restored basic firmware and the received first binary file (S430).

As described above, the exemplary embodiments provide a method for making an updated firmware in an electronic device in which a firmware is being executed.

While not restricted thereto, the exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, the exemplary embodiments may be written as computer programs transmitted over a computer-readable transmission medium, such as a carrier wave, and received and implemented in general-use digital computers that execute the programs. Moreover, while not required in all aspects, one or more units of the electronic device 100, 200, 400 can include a processor or microprocessor executing a computer program stored in a computer-readable medium, such as the local storage 110, 210, or 410.

Although a few exemplary embodiments have been shown and described, it will be appreciated by those skilled in the art that changes may be made in these exemplary embodiments without departing from the principles of the invention, the scope of which is defined in the appended claims.

## Claims

1. An electronic device in which a firmware is being currently executed, the device comprising:
a storage configured to store a basic firmware used to upgrade the currently-executed firmware;
a receiver for receiving a first binary file for making an upgraded firmware based on the stored basic firmware; and
a controller configured to make the upgraded firmware based on the received first binary file and the stored basic firmware, if the first binary file is received.

2. The device of claim 1, wherein the currently-executed firmware is made based on the stored basic firmware.

3. The device of claim 1 or claim 2, wherein the first binary file is a differential image file between the basic firmware and the upgraded firmware.

4. The device of claim 1 or claim 2, wherein the first binary file comprises information for making the upgraded firmware based on the basic firmware.

5. The device of any one of the preceding claims, wherein:
the receiver comprises a communication unit which performs a network communication with an external apparatus; and
the controller is configured to control the communication unit to transmit a request message for upgrading the currently-executed firmware to the external apparatus, and to receive the first binary file from the external apparatus in response to the request message.

6. The device of any one of claims 1 to 4, further comprising:
a signal processor configured to extract the first binary file from a broadcasting signal including the first binary file,
wherein the receiver is arranged to receive the broadcasting signal, and
wherein if the receiver receives the broadcasting signal including the first binary file, the controller controls the signal processor to extract the first binary file from the received broadcasting signal, and the controller makes the upgraded firmware based on the extracted first binary file and the stored basic firmware.

7. An electronic device in which a firmware is being currently executed, the device comprising:
a storage configured to store a second binary file for restoring a basic firmware used to upgrade the currently-executed firmware;
a receiver for receiving a first binary file for making an upgraded firmware based on the basic firmware; and
a controller configured to restore the basic firmware based on the currently-executed firmware and the stored second binary file, if the first binary file is received by the receiver, and to makes the upgraded firmware based on the restored basic firmware and the received first binary file.

8. The device of claim 7, wherein the currently-executed firmware is made based on the restored basic firmware.

9. The device of claim 7 or claim 8, wherein the second binary file is a differential image file between the basic firmware and the currently-executed firmware.

10. The device of claim 7 or claim 8, wherein the second binary file comprises information for restoring the basic firmware based on the currently-executed firmware.

11. The device of any one of claims 7 to 10, wherein the first binary file is a differential image file between the basic firmware and the upgraded firmware.

12. The device of any one of claims 7 to 10, wherein the first binary file comprises information for making the upgraded firmware based on the basic firmware.

13. The device of any one of claims 7 to 12, wherein:
the receiver comprises a communication unit which performs a network communication with an external apparatus; and
the controller is configured to control the communication unit to transmit a request message for upgrading the currently-executed firmware to the external apparatus, and to receive the first binary file from the external apparatus in response to the request message.

14. The device of any one of claims 7 to 12, further comprising:
a signal processor configured to extract the first binary file from a broadcasting signal including the first binary file,
wherein the receiver serves to receive the broadcasting signal, and
wherein if the receiver receives the broadcasting signal including the first binary file, the controller controls the signal processor to extract the first binary file from the received broadcasting signal, and the controller makes the upgraded firmware based on the extracted first binary file and the restored basic firmware.
